# FASCICULE DE BREVET EUROPEEN

(11) **EP 2 312 452 B1**
(45) Date de publication et mention de la délivrance du brevet: **04.03.2015**
(21) Numéro de dépôt: 10170049.0
(22) Date de dépôt: 19.07.2010
(51) Int. Cl.: G06F 13/42

(54) **Protocole de communication sur bus unifilaire**
Kommunikationsprotokoll auf einem Eindraht-Bus
Communication protocol on a one-wire bus

(30) Priorité: 22.07.2009 FR 0955109
(43) Date de publication de la demande: 20.04.2011
(73) Titulaire: PROTON WORLD INTERNATIONAL N.V., 1930 Zaventem (BE)
(72) Inventeur: Ingels, Didier, 1367 Grand-Rosiere (BE)
(74) Mandataire: de Beaumont, Michel

(56) Documents cités:
- EP-A1- 0 134 174
- US-A- 2 548 345
- US-A1- 2003 219 004
- US-A1- 2004 208 200

## Description

### Domaine de l'invention

La présente invention concerne de façon générale les circuits électroniques et, plus particulièrement, les protocoles de communication sur liaison unifilaire. L'invention concerne également de tels protocoles capables de fonctionner de façon bidirectionnelle.

### Exposé de l'art antérieur

Il existe de nombreux protocoles de communication sur un bus unifilaire entre deux circuits électroniques. On fait souvent référence à des protocoles dénommés SWP (Single Wire Protocol) ou I2C qui sont des protocoles normalisés. De tels protocoles exploitent en fait deux lignes de transmission, l'une pour un signal d'horloge et l'autre pour un signal de données.

Un problème des bus unifilaires est que les charges (les circuits d'émission et de réception) qui y sont connectées engendrent des variations de couplage. De plus, les bus unifilaires sont souvent sensibles au bruit dans la mesure où les trames de communication sont dépourvues de niveaux de référence.

### Résumé

Il serait souhaitable de disposer d'un protocole de communication sur un bus unifilaire qui pallie tout ou partie des inconvénients des protocoles usuels.

Un objet d'un mode de réalisation de l'invention est de proposer un protocole de communication sur bus unifilaire véhiculant à la fois les signaux de synchronisation et de données.

Un autre objet d'un mode de réalisation de la présente invention est de proposer un protocole de communication bidirectionnel.

Un autre objet d'un mode de réalisation de la présente invention est de proposer un système multipoint dans lequel un même circuit maître peut envoyer des données à plusieurs circuits esclaves.

Pour atteindre tout ou partie de ces objets ainsi que d'autres, il est prévu un procédé de communication sur un bus unifilaire entre un dispositif émetteur et au moins un dispositif récepteur, dans lequel chaque bit de données est transmis dans une trame comportant successivement :
un créneau de synchronisation différent d'un potentiel de référence des dispositifs ;
un premier créneau d'attente dans un état correspondant au potentiel de référence du circuit ;
un créneau représentant le bit de données à transmettre ;
un deuxième créneau d'attente identique au premier ;
un créneau destiné à contenir l'état d'un bit optionnel de réponse ; et
un créneau de fin identique aux créneaux d'attente.

Selon un mode de réalisation de la présente invention, les durées de tous les créneaux de la trame sont identiques.

Selon un mode de réalisation de la présente invention, le créneau de synchronisation est codé différemment du niveau haut des bits de données.

Selon un mode de réalisation de la présente invention, le potentiel de référence est identique au niveau bas des bits de données.

Selon un mode de réalisation de la présente invention, pour émettre des données du récepteur vers l'émetteur, le récepteur code le créneau destiné au bit de réponse.

Selon un mode de réalisation de la présente invention, le bus est, au repos, placé au potentiel de référence.

On prévoit également un module de transmission réception, comportant :
une unité de commande ;
un élément de sérialisation de données à transmettre ;
un élément de parallèlisation de données reçues ;
un encodeur des données à transmettre, recevant la sortie de l'élément de sérialisation et dont la sortie est connectée au bus unifilaire ; et
un décodeur dont l'entrée est connectée au bus unifilaire et dont la sortie est reliée en entrée du circuit de parallèlisation.

Selon un mode de réalisation de la présente invention, le module comporte une entrée de configuration de la vitesse de transmission.

Selon un mode de réalisation de la présente invention, le circuit comporte une entrée de configuration du statut maître ou esclave du circuit concerné.

Selon un mode de réalisation de la présente invention, le circuit comporte une entrée de configuration du mode de codage et de décodage des transmissions parmi plusieurs modes.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc partiel d'un système de communication du type auquel s'applique à titre d'exemple la présente invention ;
la figure 2 illustre une trame du protocole selon un mode de réalisation de la présente invention ;
la figure 3 est un chronogramme d'un mode de mise en oeuvre de la présente invention ;
la figure 4 est un chronogramme d'un autre mode de mise en oeuvre de la présente invention ;
la figure 5 est un schéma bloc simplifié d'un module de communication selon un mode de réalisation de la présente invention ;
la figure 6 est un organigramme simplifié illustrant un exemple de fonctionnement du protocole de communication côté circuit maître ; et
la figure 7 est un organigramme simplifié illustrant un exemple de fonctionnement du protocole de communication côté circuit esclave.

De mêmes éléments ont été désignés par de même référence sur différentes figures.

### Description détaillée

Par souci de clarté, seuls les éléments utiles à la compréhension de l'invention ont été représentés et seront décrits. En particulier, la nature des données à transmettre n'a pas été détaillée, l'invention étant compatible avec toute donnée numérique usuelle. De plus, la destination des données transmises n'a pas non plus été détaillée, l'invention étant là encore compatible avec toute donnée habituellement exploitée.

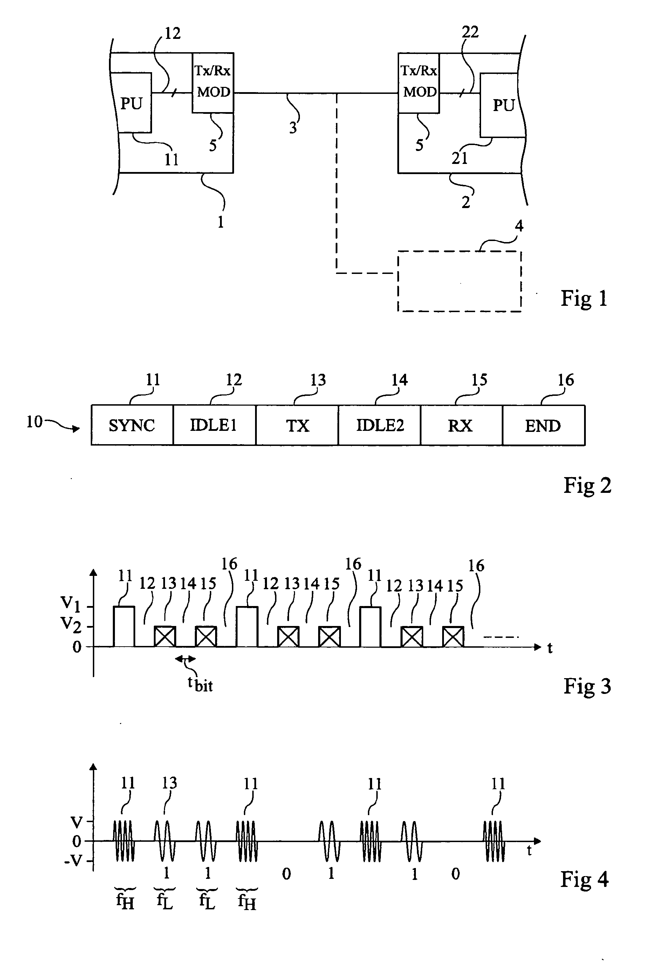

La figure 1 est un schéma-bloc partiel d'un système de communication entre deux circuits 1 et 2 par l'intermédiaire d'une liaison ou bus unifilaire 3. Chaque circuit 1, 2 comporte une ou plusieurs unités de traitement 11, 21 (PU) des données à émettre et à recevoir. Chaque unité 11 ou 21 communique avec un module 5 (Tx/Rx MOD) d'émission-réception, dont le rôle est de convertir des données à transmettre présentes sur un bus 12, respectivement 22, pour les faire transiter sur la liaison unifilaire 3 à destination de l'autre circuit, et à décoder un signal reçu sur le bus unifilaire 3 en des données de réception à transmettre à l'unité de traitement correspondante. D'autres circuits, (mémoires, capteurs, divers circuits de traitement selon l'application, etc...) peuvent équiper les circuits 1 et 2.

Pour une communication donnée, l'un des circuits 1 ou 2 fonctionne en maître et l'autre en esclave. Le circuit maître impose le rythme de la communication au circuit esclave.

Le cas échéant, d'autres circuits 4 (en pointillés en figure 1) sont raccordés sur la liaison unifilaire 3 pour une application à une structure de communication multipoint. Dans ce cas, un circuit assure la fonction de maître et tous les autres fonctionnent en circuit esclave. Le plus souvent, le début d'une communication inclut une adresse du circuit destinataire de cette communication, ce qui permet, dans un mode bidirectionnel, que seul ce circuit réponde au circuit maître.

Pour un fonctionnement dans un système où plusieurs circuits sont susceptibles de prendre le bus pour démarrer une transmission à destination d'un ou plusieurs autres circuits, c'est-à-dire où plusieurs circuits sont susceptibles d'être maîtres, le bus unifilaire est au repos à la masse. Au repos, tous les circuits connectés tirent (faiblement) le bus à la masse, simplement afin que le niveau du bus ne soit pas flottant. Avant de prendre la ligne pour démarrer une communication, un circuit connecté sur le bus souhaitant émettre des données commence par s'assurer que le bus est au niveau bas pendant une durée suffisante. Par durée suffisante, on entend, comme cela sera mieux compris par la suite, une durée permettant de s'assurer qu'aucune communication n'est en cours sur le bus. Si le bus est libre, le circuit souhaitant en prendre le contrôle tire le bus à un niveau différent, typiquement un niveau proche de son potentiel d'alimentation, par exemple, au moyen d'une résistance (pull-up). Les autres circuits connectés au bus se placent alors en mode esclave.

Dans un mode de réalisation simplifié où un seul circuit est susceptible de jouer le rôle de maître, de telles précautions ne sont pas nécessaires.

La figure 2 représente un mode de réalisation d'une trame de transmission entre un circuit maître et un ou plusieurs circuits esclaves. Cette trame 10 comporte six créneaux temporels. Tous les créneaux d'une même trame sont de même durée. Par ailleurs, les différents créneaux de la trame 10 respectent des états prédéfinis.

Chaque trame 10 comporte, successivement :
un créneau 11 de synchronisation (SYNC) ;
un créneau 12 d'attente (IDLE 1) ;
un créneau 13 représentant l'état (TX) d'un bit transmis dans la trame dans le sens émetteur vers récepteur ou maître vers esclave ;
un deuxième créneau 14 d'attente (IDLE 2) ;
un créneau 15 représentant l'état d'un bit transmis du récepteur vers l'émetteur (RX) ; et
un créneau 16 de fin (END) ou autre créneau d'attente.

Les créneaux de synchronisation 11 sont représentés par un état considéré comme haut, choisi pour être différent des deux états (par exemple, 0 et 1) représentatifs d'un bit de données. Ce créneau 11 permet à chaque récepteur de synchroniser son circuit de réception. Le début de synchronisation se fait sur le front montant du créneau 11 et la fin de synchronisation sur le front descendant. L'intervalle de temps (durée du créneau de synchronisation) sert de base de temps à toute la trame.

Les créneaux d'attente 12 et 14, de même que le créneau 16 sont représentés par un état bas. Cet état est, par exemple, identique à l'un (par exemple, 0) des deux états représentatifs d'un bit de données. La présence de ces créneaux 12 et 14 entre les créneaux de données permet d'absorber les éventuelles perturbations et de préparer les émissions et réceptions proprement dites.

Les créneaux contenant les bits transmis par l'émetteur TX (appelés bits d'émission) ou par le récepteur RX (appelés bits de réception) prennent un état haut ou bas selon la valeur 1 ou 0 (ou inversement) à transmettre. L'état haut des bits transmis est codé différemment de l'état haut du créneau de synchronisation. Dans un mode de réalisation particulier, un bit de réception à l'état haut correspond à un accusé de réception du bit d'émission.

La figure 3 est un chronogramme illustrant un premier exemple de mise en oeuvre de la trame 10 de la figure 2. Dans cet exemple, on considère une modulation en tension. Les états bas sont codés par un niveau de tension bas, de préférence le potentiel de référence de la tension d'alimentation des circuits (typiquement, la masse). Les états hauts sont codés par deux niveaux de tension V1 et V2 (V1 étant arbitrairement supérieur à V2) différents selon qu'il s'agit du créneau de synchronisation ou d'un bit de données. Les circuits connectés sur le bus ont un potentiel de référence (masse) commun, mais peuvent avoir des potentiels hauts d'alimentation différents, pourvu qu'ils disposent des niveaux V1 et V2. Pour simplifier la suite de la description, on suppose que les circuits du système sont alimentés indépendamment du bus et avec le même niveau de tension. L'état bas ou haut des créneaux 13 et 15 a été illustré par une croix pour faire ressortir le fait que le créneau prend le niveau 0 ou V2 selon l'état du bit à transmettre.

Comme l'illustre la figure 3, les bits de données à transmettre sont transmis dans des trames successives. L'intervalle entre deux trames est de préférence nul, c'est-à-dire qu'un créneau de synchronisation 11 d'une trame suit le créneau de fin 16 de la trame précédente. En variante, un décalage temporel peut être prévu. En particulier, un tel décalage est généralement présent entre la fin d'une transmission et le début de la suivante.

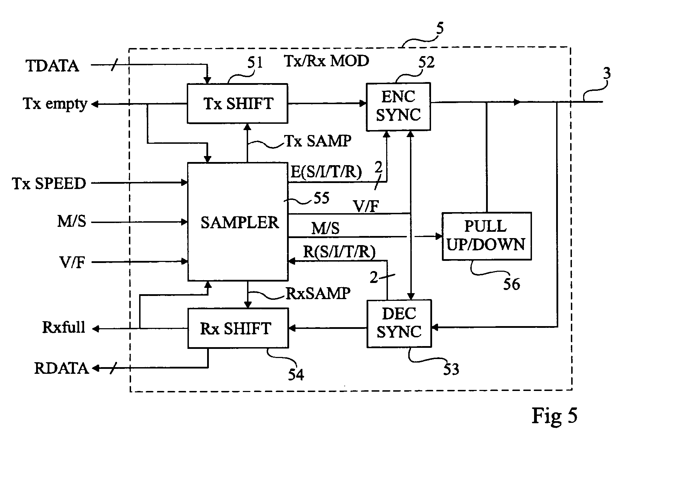

On notera que chaque transmission comporte un nombre de bits transmis fixe (donc un même nombre de trames). Ce nombre (par exemple 8 ou 16 bits) correspond de préférence à la profondeur (nombre de bits) d'un registre utilisé en réception comme cela sera mieux compris de la figure 5 qui va suivre.

La durée t_{bit} de chaque créneau de la trame dépend de la vitesse de transmission souhaitée, choisie par exemple en fonction de la capacité des détecteurs des circuits. Ce temps doit, au minimum, permettre l'interprétation de la trame par le circuit récepteur.

La figure 4 est un chronogramme illustrant un autre mode de réalisation dans lequel les états hauts du créneau de synchronisation et des bits de données sont respectivement codés par des signaux alternatifs à deux fréquences différentes. Par exemple, le créneau de synchronisation est codé par un groupe d'alternances (par exemple, un train sinusoïdal) ou un train d'impulsions à une première fréquence (f_{H}) tandis qu'un état haut des créneaux 13 ou 15 est codé par un groupe d'alternances ou un train d'impulsions à une deuxième fréquence (f_{L}) par exemple inférieure à la première. Les états bas des créneaux 12, 14 et 16 ainsi que les bits de valeur 0 transmis dans les créneaux 13 et 14 sont codés par une absence de signal et un bus forcé au potentiel de référence (la masse). Dans ce mode de réalisation, les signaux alternatifs sont, de préférence, centrés sur le potentiel de référence (entre des potentiels -V et V). La figure 4 illustre la transmission de trois bits d'émission (créneaux TX) ayant des états 1, 0 et 1, et de trois bits de réception (créneaux RX) ayant des états 1, 1 et 0.

La figure 5 est un schéma bloc simplifié d'un module 5 d'émission-réception pouvant équiper les différents circuits du système (voir figure 1). Les données TDATA à transmettre sont fournis au module 5, par exemple, en parallèle par mot (par exemple de 8 ou 16 bits) sur un bus de sortie de l'unité de traitement (non représentée en figure 5). Pour les besoins de la transmission, ces données doivent être sérialisées. Pour cela, le module 5 comporte un circuit sérialiseur d'émission 51 (Tx SHIFT), par exemple un registre à décalage, de préférence de type premier entré, premier sorti (FIFO). Le registre 51 reçoit en parallèle les données TDATA à transmettre et fournit bit par bit ces données à un encodeur 52 (ENC SYNC) chargé de générer les trames 10. La sortie de l'encodeur 52 est reliée au bus unifilaire 3. Côté réception, le bus 3 est relié en entrée d'un circuit 53 de décodage (DEC SYNC) chargé de décoder les trames reçues. La sortie du décodeur 53 est envoyée en entrée d'un circuit 54 de mise en parallèle (Rx SHIFT) du flux reçu en mots RDATA sur plusieurs bits (par exemple 8 ou 16). Le fonctionnement du module 5 est contrôlé par un circuit 55 (SAMPLER) qui reçoit, par exemple de l'unité de traitement, un signal Tx SPEED indicateur de la vitesse de transmission souhaitée. Ce signal peut correspondre à un signal d'horloge ou, en supposant que le module 5 reçoit par ailleurs un signal d'horloge, à un signal de sélection de vitesse. Le circuit 55 reçoit également un signal M/S indicateur du mode maître ou esclave dans lequel se trouve le circuit contenant le module 5. Il reçoit en outre, des registres 51 et 54, une information relative aux mots émis et reçus. Plus précisément, le registre 51 fournit une information Txempty indiquant qu'il est vide, c'est-à-dire que l'octet qui lui a été chargé a été transmis (au moins envoyé à l'encodeur 52). De façon similaire le registre 54 fournit un signal Rxfull indiquant qu'il contient un mot complet de données. Ces signaux indicateurs Txempty et Rxfull sont également envoyés au circuit 55 pour provoquer l'envoi d'un nouveau mot de données ou signaler la fourniture d'un mot reçu.

Les circuits 52 et 53 assurent également les fonctions de modulation et de démodulation des trames codées.

Enfin, le module 5 comporte un circuit 56 (PULL UP/DOWN) de gestion des fonctions tirant le bus à l'état haut (pull up) ou à l'état bas (pull down). Ce circuit sert au repos à imposer un état bas sur le bus, puis à détecter qu'un circuit a tiré le bus à l'état haut, ce qui permet au circuit courant de se placer en mode esclave.

Si le module 5 est capable de fonctionner à la fois en mode tension (figure 3) et en mode fréquence (figure 4), celui-ci reçoit un bit de configuration V/F que le circuit 55 fait suivre aux encodeurs 52 et décodeurs 53 pour les placer dans la configuration adaptée.

Le circuit 55 fournit à l'encodeur 52 une information relative au bit de la trame à transmettre. Cette information est par exemple transmise sur un bus de commande E(S/I/T/R) sous la forme d'un signal S/I/T/R indiquant à l'encodeur la nature du créneau courant de la trame parmi le créneau de synchronisation, un créneau d'attente, le créneau d'émission ou le créneau de réception.

De façon similaire, le décodeur 53 fournit au circuit 55, une information sur la nature du créneau courant qu'il reçoit sous la forme d'un signal S/I/T/R sur un bus R(S/I/T/R).

Enfin, le circuit 55 fournit aux registres 51 et 52 des signaux de commande TxSAMP et RxSAMP pour synchroniser leur fonctionnement avec celui des encodeur 52 et décodeur 53.

Les signaux Txempty, M/S, V/S, Rxfull, TxSAMP et RxSAMP sont, par exemple, des signaux binaires dont l'état représente l'information véhiculée par le signal. Les signaux S/I/T/R sont par exemple des signaux sur deux bits respectivement décodés par l'encodeur 52 et l'échantillonneur 55. D'autres modes de commande sont possibles, pourvu de respecter les fonctionnalités décrites. De plus, d'autres signaux de commande et de configuration peuvent transiter entre les différents éléments du module (par exemple, des signaux d'alimentation, d'horloge, etc.).

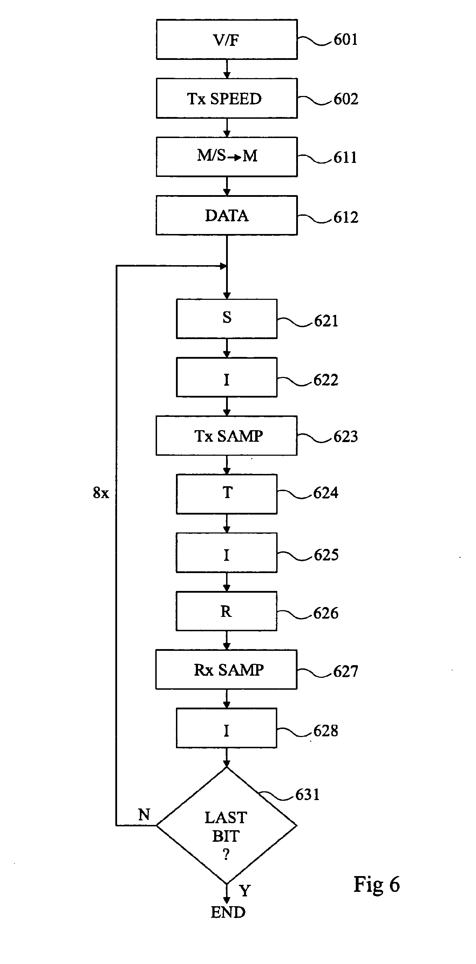

La figure 6 est un organigramme simplifié d'un exemple de transmission d'un octet de donnée d'un circuit maître vers un circuit esclave. Une première étape (bloc 601, V/F) consiste à sélectionner le mode tension ou fréquence de la transmission. Cette sélection est optionnelle. Dans un mode de réalisation simplifié, le système ne fonctionne qu'en mode tension ou qu'en mode fréquence et les différents circuits sont alors figés pour ce mode de fonctionnement.

Dans une deuxième étape (bloc 602, Tx SPEED), l'unité centrale de traitement communique la vitesse de communication souhaitée. Là encore, dans un mode de réalisation simplifié, la vitesse de transmission est prédéfinie. On notera cependant que la vitesse de transmission peut être modifiée à tout moment (d'un bit à l'autre) dans la mesure où un créneau de synchronisation est présent à chaque bit.

Une troisième étape (bloc 611, MS -> M) consiste à indiquer au module 5 un fonctionnement en mode maître. Puis (bloc 612, DATA), un octet de données est chargé dans le registre 51.

Le circuit 55 synchronise alors le fonctionnement du module 5 pour les huit bits de données à transmettre. Le circuit 55 est informé de la présence de l'octet dans le registre 51 par un changement d'état du signal Txempty. Le circuit 55 place (bloc 621, S) le bus E(S/I/T/R) dans un état indiquant au circuit 52 de transmettre un créneau de synchronisation. Puis (bloc 622, 1), il bascule sur l'état indiquant l'envoi d'un créneau d'attente. Le circuit 55 provoque alors un changement d'état du signal TxSAMP (bloc 623) à destination du registre 51 pour que celui-ci présente le premier bit à transmettre à l'encodeur 52. Puis (bloc 624, T), il commute le bus E (S/I/T/R) (bloc 624) sur la valeur T pour provoquer l'émission du bit de donnée. Le circuit 55 commute alors (bloc 625, I) le bus E(S/I/T/R) sur un deuxième créneau d'attente I, puis sur l'état R (bloc 626) pour placer l'encodeur 52 en attente pendant la réception d'un bit par le décodeur 53. Lorsque le décodeur 53 a décodé le créneau 15 de la trame, il indique au circuit 55 par une commutation du bus R(S/I/T/R) qu'il a reçu un créneau 15. Le circuit 55 commute alors le signal Rx SAMP (bloc 627) pour signaler au registre 54 qu'il convient de charger le bit fourni par le décodeur 53. Enfin, le circuit 55 commute le bus E(S/I/T/R) sur le créneau de fin ou un créneau d'attente (bloc 628, I).

Les étapes 621 et 628 sont effectuées tant que le dernier bit de données (bloc 631, LAST BIT) n'est pas transmis. Une fois celui-ci transmis, on sort de la boucle de transmission d'un octet (sortie Y du bloc 631).

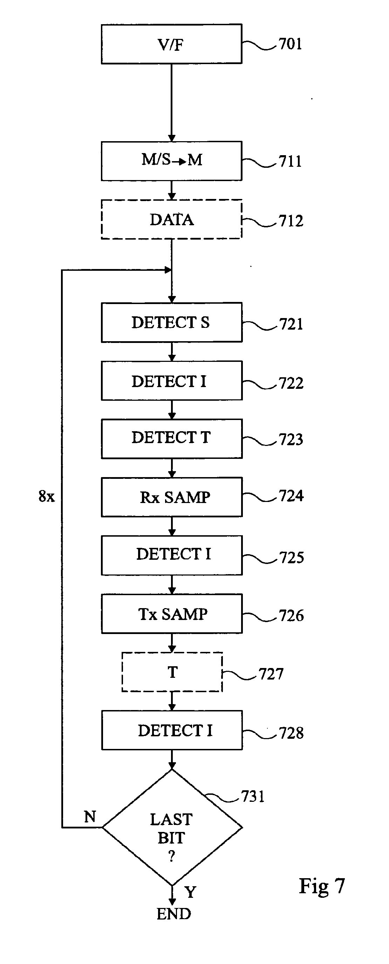

La figure 7 est un organigramme simplifié d'un exemple de fonctionnement d'un récepteur (module 5 fonctionnant en mode esclave).

Comme pour le module maître, on commence bloc 701 par sélectionner le mode de fonctionnement entre tension et fréquence.

Le module 5 est commuté en mode esclave (bloc 711, M/S -> S) par le circuit 55 qui a détecté qu'un autre circuit a pris le bus.

Dans le cas d'une communication bidirectionnelle le module récepteur prépare des données à envoyer (bloc 712 en pointillés, DATA).

Puis, débute une boucle de réception d'un octet. Dès que le module 5 s'est placé en mode esclave, il s'attend à ce que le prochain front soit le début d'un créneau de synchronisation, la mesure de la durée du créneau de synchronisation permettant au circuit 55 de synchroniser la détection des envois qu'il fera en réponse. La première étape est donc (bloc 721, DETECTS S) la détection d'un créneau S. Lorsqu'il est détecté, le circuit 53 commute le bus R(S/I/T/R) pour indiquer au circuit 55 la réception du créneau de synchronisation. L'étape suivante (bloc 722, DETECT I) est la détection d'un créneau d'attente. Le circuit 53 place le bus R(S/I/T/R) pour indiquer au circuit 55 la réception du créneau 12. Puis, il configure le détecteur 53 pour le décodage du créneau 13 (lecture d'un niveau 0 ou d'un niveau 1). Dès que le bit de donnée est décodé (bloc 723, DETECT T), le détecteur 53 place le bus R(S/I/T/R) dans l'état correspondant. L'échantillonneur 55 commute alors (bloc 724) le signal Rx SAMP pour indiquer au registre 54 qu'il prenne en compte l'état présent en sortie du détecteur 53. Puis (bloc 725, DETECT I), le décodeur 53 détecte un créneau d'attente.

Si des données doivent être envoyées du récepteur à l'émetteur, le circuit 55 le détecte par l'état du signal Txempty qui lui indique que des bits à transmettre sont présents dans le registre 51. Le circuit 55 commute alors (bloc 726 en pointillés) le signal TxSAMP pour l'envoi du bit et commute (bloc 727 C en pointillés) le bus E(S/I/T/R) pour que l'encodeur 52 transmette le bit sur le bus 3.

Il n'est pas gênant que le décodeur 53 poursuive la détection pendant le créneau 15. En effet, comme les créneaux sont tous de même durée, le détecteur 53 ne tient pas compte du créneau 15.

Le détecteur 53 détecte ensuite le créneau de fin (bloc 728).

Les étapes 721 et 728 se reproduisent tant que l'octet n'est pas terminé (bloc 731, LAST BIT).

On voit qu'un créneau de synchronisation est envoyé à chaque échange de bit de données. Cela permet une resynchronisation des registres à décalage des modules d'émission et de réception.

De préférence, le circuit ayant initié la transmission continue jusqu'à avoir reçu un accusé de réception d'un octet complet. En variante, l'émission ne passe d'un bit de données au bit de données suivant qu'à partir du moment où le récepteur a accusé réception du bit précédent.

On notera que le statut maître et esclave des différents circuits est configurable lors de la communication. Toutefois, dans un mode de réalisation simplifié, on pourra utiliser des circuits dédiés. Dans ce cas, la résistance de tirage du bus 3 à l'état haut peut être omise.

La mise en oeuvre pratique de l'invention et notamment du module d'émission réception 5 à partir des indications fonctionnelles données ci-dessus est à la portée de l'homme du métier en utilisant des composants électroniques usuels. De plus, bien que l'invention ait été décrite en relation avec un mode tension et mode fréquence particuliers, d'autres modes de codage des états haut et bas pourront être envisagés. Par exemple, une phase différente selon l'état 0 ou 1 avec un signal à fréquence constante. Enfin, les séquencements prévus à titre d'exemple dans les organigrammes des figures 6 et 7 pourront être modifiés en fonction de l'application.

## Revendications

1. Procédé de communication sur un bus unifilaire (3) entre un dispositif émetteur (1) et au moins un dispositif récepteur (2, 4), dans lequel chaque bit de données est transmis dans une trame de six créneaux, comportant successivement :
un créneau de synchronisation (11) différent d'un potentiel de référence des dispositifs, sur le front montant duquel débute la synchronisation et sur le front descendant duquel se termine la synchronisation, la durée du créneau de synchronisation servant de base de temps à la trame ;
un premier créneau d'attente (12) dans un état correspondant au potentiel de référence du circuit ;
un créneau (13) représentant le bit de données à transmettre ;
un deuxième créneau d'attente (14) identique au premier ;
un créneau (15) destiné à contenir l'état d'un bit optionnel de réponse ; et
un créneau de fin identique aux créneaux d'attente.

2. Procédé selon la revendication 1, dans lequel les durées de tous les créneaux de la trame (10) sont identiques.

3. Procédé selon la revendication 1 ou 2, dans lequel le créneau de synchronisation (11) est codé différemment du niveau haut des bits de données.

4. Procédé selon l'une quelconque des revendications 1 à 3, dans lequel le potentiel de référence est identique au niveau bas des bits de données.

5. Procédé selon l'une quelconque des revendications 1 à 4, dans lequel pour émettre des données du récepteur vers l'émetteur, le récepteur code le créneau destiné au bit de réponse.

6. Procédé selon l'une quelconque des revendications 1 à 5, dans lequel le bus (3) est, au repos, placé au potentiel de référence.

7. Module de transmission réception adapté à mettre en oeuvre le procédé conformément à l'une quelconque des revendications 1 à 6, comportant :
une unité de commande (55) ;
un élément (51) de sérialisation de données à transmettre ;
un élément (54) de parallèlisation de données reçues ;
un encodeur (55) des données à transmettre, recevant la sortie de l'élément de sérialisation et dont la sortie est connectée au bus unifilaire (3) ; et
un décodeur (53) dont l'entrée est connectée au bus unifilaire et dont la sortie est reliée en entrée du circuit de parallèlisation.

8. Module selon la revendication 7, comportant une entrée (Tx SPEED) de configuration de la vitesse de transmission.

9. Module selon la revendication 7 ou 8, comportant une entrée (M/S) de configuration du statut maître ou esclave du circuit concerné.

10. Module selon l'une quelconque des revendications 7 à 9, comportant une entrée de configuration du mode de codage et de décodage des transmissions parmi plusieurs modes.

## Patentansprüche

1. Ein Verfahren zur Kommunikation beziehungsweise Nachrichtenübertragung über einen Einzeldrahtbus (3) zwischen einer Sendevorrichtung (1) und mindestens einer Empfangsvorrichtung (2, 4), wobei jedes Datenbit in einem Rahmen von sechs Schlitzen übertragen wird, die aufeinander folgend Folgendes aufweisen:
einen Synchronisationsschlitz (11) unterschiedlich von einer Bezugsspannung der Vorrichtungen, wobei auf der ansteigenden Flanke desselben die Synchronisation startet und auf der abfallenden Flanke desselben die Synchronisation endet, wobei die Zeitdauer des Synchronisationsschlitzes die Zeitbasis des Rahmes bildet;
einen ersten Leerlaufschlitz (12) in einem Zustand entsprechend der Bezugsspannung der Schaltung;
einen Schlitz (13), der das zu übertragende Datenbit repräsentiert;
einen zweiten Leerlaufschlitz (14) identisch zum ersten Leerlaufschlitz;
einen Schlitz (15) vorgesehen zum Enthalten des Zustandes eines optionalen Antwort- bzw. Ansprechbits; und
einen Endschlitz identisch zu den Leerlaufschlitzen.

2. Das Verfahren nach Anspruch 1, wobei die Zeitdauern sämtlicher Schlitze des Rahmens (10) identisch sind.

3. Das Verfahren nach Anspruch 1 oder 2, wobei der Synchronisationsschlitz (11) unterschiedlich von dem hohen Pegel der Datenbits kodiert ist.

4. Das Verfahren nach einem der Ansprüche 1 bis 3, wobei die Bezugsspannung identisch zu dem niedrigen Pegel der Datenbits ist.

5. Das Verfahren nach einem der Ansprüche 1 bis 4, wobei zur Übertragung der Daten von dem Empfänger zu dem Sender der Empfänger den Schlitz vorgesehen für das Antwort- bzw. Ansprechbit kodiert.

6. Das Verfahren nach einem der Ansprüche 1 bis 5, wobei der Bus (3) in dem Leerlaufzustand auf die Bezugsspannung eingestellt ist.

7. Eine Sende/Empfänger-Einheit beziehungsweise eine Transceiver-Einheit, die in der Lage ist das Verfahren nach einem der Ansprüche 1 bis 6 zu implementieren, wobei folgendes vorgesehen ist:
eine Steuereinheit (55);
ein Element (51) zum Serialisieren zu übertragender Daten;
ein Element (54) zur Parallelisierung empfangener Daten;
ein Kodierer (55) der zu sendenden Daten, der die Ausgangsgröße des Serialisationselements empfängt und mit seinem Ausgang mit dem Einzeldrahtbus (3) verbunden ist; und
ein Dekodierer (53) der mit seinem Eingang mit dem Einzeldrahtbus verbunden ist und der mit seinem Ausgang mit dem Eingang der Parallelisierungsschaltung verbunden ist.

8. Die Einheit nach Anspruch 7, die einen Eingang (Tx SPEED) zur Konfigurierung der Sendegeschwindigkeit aufweist.

9. Die Einheit nach Anspruch 7 oder 8, die einen Eingang (M/S) zum Konfigurieren des Master- oder Slavezustands der betroffenen Schaltung aufweist.

10. Die Einheit nach einem der Ansprüche 7 bis 9, wobei eine Eingangsgröße vorgesehen ist zur Konfigurierung der Betriebsart unter mehreren Betriebsarten, und zwar der Betriebsart in der die Sendungen kodiert und dekodiert werden.

## Claims

1. A method of communication over a single-wire bus (3) between a transmitter device (1) and at least one receiver device (2, 4), wherein each data bit is transmitted in a frame of six slots, successively comprising:
a synchronization slot (11) different from a reference voltage of the devices, on the rising edge of which the synchronization starts, and on the falling edge of which the synchronization ends, the time duration of the synchronization slot forming the time base of the frame;
a first idle slot (12) in a state corresponding to the reference voltage of the circuit;
a slot (13) representing the data bit to be transmitted;
a second idle slot (14) identical to the first one;
a slot (15) intended to contain the state of an optional response bit; and
an end slot identical to the idle slots.

2. The method of claim 1, wherein the durations of all the slots of the frame (10) are identical.

3. The method of claim 1 or 2, wherein the synchronization slot (11) is coded differently from the high level of the data bits.

4. The method of any of claims 1 to 3, wherein the reference voltage is identical to the low level of the data bits.

5. The method of any of claims 1 to 4, wherein, to transmit data from the receiver to the transmitter, the receiver encodes the slot intended for the response bit.

6. The method of any of claims 1 to 5, wherein the bus (3) is, in the idle state, set to the reference voltage.

7. A transceiver unit capable of implementing the method of any of claims 1 to 6, comprising:
a control unit (55);
an element (51) for serializing data to be transmitted;
an element (54) for parallelizing received data;
an encoder (55) of the data to be transmitted, receiving the output of the serialization element and having its output connected to the single-wire bus (3); and
a decoder (53) having its input connected to the single-wire bus and having its output connected to the input of the parallelizing circuit.

8. The unit of claim 7, comprising an input (Tx SPEED) for configuring the transmission speed.

9. The unit of claim 7 or 8, comprising an input (M/S) for configuring the master or slave status of the concerned circuit.

10. The unit of any of claims 7 to 9, comprising an input for configuring the mode in which the transmissions are coded and decoded among several modes.
